# EUROPEAN PATENT APPLICATION

(11) **EP 2 177 106 A1**
(43) Date of publication of application: **21.04.2010**
(21) Application number: 09172862.6
(22) Date of filing: 13.10.2009
(51) Int. Cl.: A01K 45/00, G01G 13/08, G01G 17/08

(54) **Device and method for loading poultry into poultry containers**

(30) Priority: 14.10.2008 NL 2002093
(71) Applicant: A.H. Jansen Holding B.V., 3772 MC Barneveld (NL)
(72) Inventor: Jansen, Albrecht Hendrik, 3772 MC, Barneveld (NL)
(74) Representative: Eveleens Maarse, Pieter

(57) **Abstract**

The invention relates to a device for loading poultry into poultry containers, comprising a transport member (4,5,8) for the poultry driven by a drive member and leading to a loading position, a weighing member situated under the loading position for weighing poultry containers located at the loading position, and a control member for stopping the drive member when the weight measured by the weighing member exceeds a preset value. Stopping of the transport member is important here in allowing these operations to take place in automated manner. This does after all achieve that the same weight of animals is always placed in the container.

The control member is preferably adapted to decrease the speed of the drive member when a first preset value is reached, and to stop the drive member when a second preset value is reached which is greater than the first value.

## Description

The invention relates to the loading of poultry into poultry containers. The loading of poultry into poultry containers, such as poultry crates, has heretofore substantially taken place by hand. The increasing scale size of poultry farms has resulted in a need for mechanical filling of such poultry containers.

The present invention provides for this purpose such a device which is provided with a transport member for the poultry driven by a drive member and leading to a loading position, a weighing member situated under the loading position for weighing poultry containers located at the loading position and a control member for stopping the drive member when the weight measured by the weighing member exceeds a preset value. Stopping of the transport member is important here in allowing these operations to take place in automated manner. This does after all achieve that the same weight of animals is always placed in the container. It is of the greatest importance that a standardized weight of poultry be placed in the containers, on the one hand for the welfare of the animals and on the other to enable automated emptying of the containers and invoicing on the basis of the number of containers. Poultry is understood to mean not only chickens, but also other bred animal species of not too large a size, such as ducks and rabbits.

The invention also relates to a method for filling a container with poultry, comprising the steps of carrying the container for filling to a loading position, bringing a transport member with its discharge end into or above a container, supplying the poultry animals with the transport member until a weight sensor placed below the loading position detects that a predetermined increase in the weight of the container has taken place, this increase in weight corresponding to the number of poultry animals which must be carried into the container, and stops the transport member, moving the transport member clear of the container, closing the container and removing the container from the loading position.

According to a preferred embodiment the control member is adapted to decrease the speed of the drive member when a first preset value is reached, and to stop the drive member when a second preset value is reached which is greater than the first value.

Shortly before the container is filled with poultry animals, the speed of the transport member is hereby decreased so that the animals enter the containers in more dosed manner, and two animals are for instance prevented from entering the container simultaneously, whereby an incorrect number of animals could be present in the container.

The second predetermined value preferably corresponds to the weight of a poultry container plus the average weight of one of the poultry animals times the number of poultry animals for which the poultry container is suitable. This embodiment here makes use of increase in weight of the containers during filling. It is possible to make use of this technique because the standard deviation of the weight of the poultry animals is small, so that the weight represents a good indication of the number of poultry animals in the container. The correct number of animals is thus always placed in a container.

It will in many cases not be possible to supply the transport member directly from a source of poultry animals. In such a case it is attractive for the transport member to be preceded by a supply member which is driven by a second drive member, and for the control member to be adapted to stop the second drive member after stopping the first drive member. This prevents an excess of poultry animals being formed on the boundary between the supply member and the transport member when the first drive member, and thereby the transport member, is stopped.

The buffer member is preferably formed by a conveyor belt of a limited length. Once the speed of the second conveyor belt has been reduced because the relevant compartment is almost full, the speed of the first conveyor belt will, with a certain time delay, also be reduced, this resulting in a build-up of animals between the first and the second conveyor belt. The buffer member in the form of the intermediate conveyor belt moves at a speed between that of the first and the second conveyor belts, so that the build-up is distributed over two different locations, i.e. between the first conveyor belt and the buffer belt and between the buffer belt and the first conveyor belt. When the relevant compartment has been filled, the second conveyor belt is then stopped and, with some delay, also the first conveyor belt, this resulting in the same effect. The buffer belt then also performs its buffer function. It is pointed out here that the period of time for which the second conveyor belt is slowed and stopped is quite short, so that the buffered animals are quickly discharged when the following compartment is filled.

Although other forms of transport means for the poultry, such as the blower pipes, are not precluded, it is recommended that the transport member and/or the supply member are formed by conveyor belts driven by electric motors.

Containers for poultry are usually applied which have an opening on the side of the conveyor belt and through which the discharge end of the transport member extends. As the container becomes fuller, it is important to move the discharge end of the transport member to an increasingly higher position. It is assumed here that the opening under the transport member is further closed in order to prevent the animals escaping, and that floors are pushed into the container after filling of an underlying layer.

In order to allow further automated operation of the filling process, it is attractive for the transport member to be provided with height-adjusting means drivable under control for the purpose of adjusting the height of the discharge end of the transport member.

Poultry containers are usually applied which are provided with a number of compartments which are placed one above another and which can each be individually opened. For the purpose of filling such poultry containers it is recommended that the control circuit is adapted to increase this height each time by the same predetermined value. It hereby becomes possible for the compartments to each be filled one by one and, after filling of each of the compartments, for transport of the poultry animals to be stopped automatically.

The same effect is achieved with a method wherein the container is divided into compartments and the discharge end of a transport member is carried into or above a first compartment, poultry animals are supplied until the weight sensor placed under the loading position detects that a predetermined increase in weight of the container has taken place, this increase in weight corresponding to the number of poultry animals that must be carried into the relevant compartment, and stops the transport member, carrying the discharge end of the transport member into or above a following compartment and repeating the above steps until all compartments have been filled.

In order to facilitate carrying of the poultry containers for loading to the loading position and discharge of the filled poultry containers, this likewise being important with the considerable increase in the size of poultry farms and the resulting large number of poultry animals for dispatch, it is attractive for the weighing member to be integrated into a transport path for supplying containers to be filled with poultry to the transport position and for discharging containers filled with poultry from the transport position.

The transport containers generally have dimensions and weight at which they are displaced using a forklift truck. Depending on the dimensions of the poultry containers, the dimensions of the vehicle into which the poultry containers must be placed, it can be attractive to pick up the poultry containers from a side extending perpendicularly of the side at which the transport means come to lie. It is attractive for such situations for the first part of the transport path to be adapted for rotation through an angle of at least 90° about a vertical axis.

The same consideration also applies for placing in readiness of the poultry containers, which usually come from a truck. It is therefore recommended that the final part of the transport path is adapted for rotation over an angle of at least 90° about a vertical axis.

In order to facilitate transport of the device by road, it is recommended that the parts adjacent to both ends of the transport path are tiltable upward over a horizontal axis.

A structurally advantageous embodiment results when the transport path is a drivable roller conveyor and the control device is adapted to drive the roller conveyor after filling of a container.

The invention will be elucidated hereinbelow with reference to the accompanying drawings, in which:
Figure 1 is a schematic top view of a device according to the invention;
Figure 2A is a schematic front view of the device shown in figure 1 in operative position;
Figure 2B is a schematic front view of the device shown in figure 1 in the collapsed position;
Figure 3A is a front view of a poultry container which can be applied in the invention;
Figure 3B is a side view of a poultry container which can be applied in the invention;
Figures 4A-4E show schematic perspective views of various stages during use of the device according to the invention; and
Figures 5A-5C show side views at various stages during loading of the poultry containers.

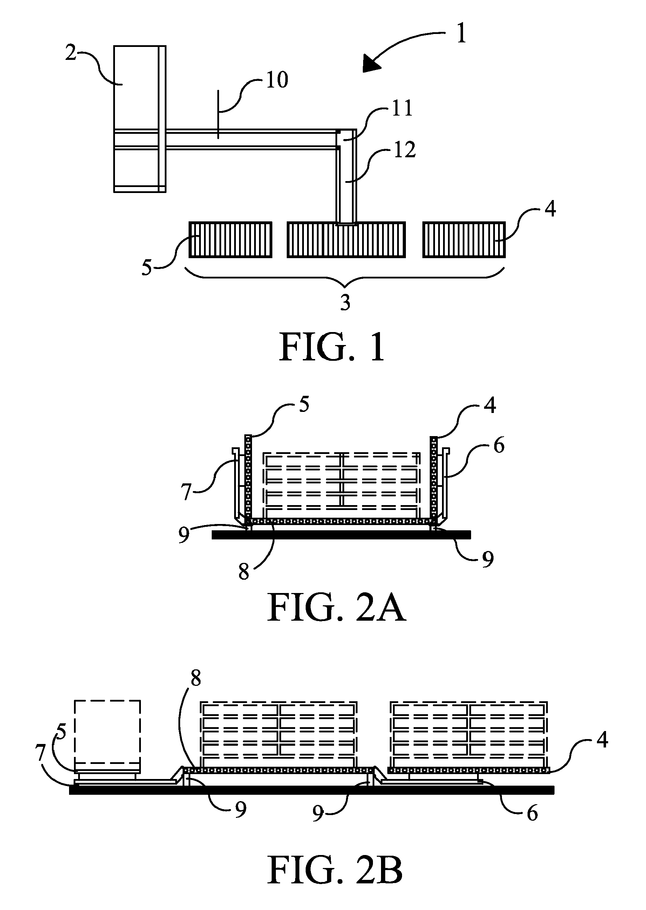

Figure 1 shows a device, designated in its entirety with 1, for loading poultry containers from a poultry house 2. The device comprises a transport path in the form of a horizontally extending roller conveyor 3 which is provided with a supply part 4 which is rotatable about a vertical axis and with a discharge part 5 likewise rotatable about a horizontal axis. Both supply part 4 and discharge part 5 are placed on a respective frame 6, 7, which frames 6, 7 are tiltable about a horizontal axis as shown in figure 2B. The width of the device can hereby be limited so that it can be easily transported over the public highway. Roller conveyor 3 also comprises a central part 8 which is placed on a weighing device 9. The weight of bodies, such as containers for poultry, placed on central part 8 of the roller conveyor can hereby be determined.

For the purpose of supplying the poultry animals for loading a first conveyor belt 10 leads from poultry house 2 to a buffer member 11, and a second conveyor belt 12 leads from the buffer member to a position above central part 8 of roller conveyor 3, this position being designated the loading position. The discharge end of the second conveyor belt 12 is height-adjustable. Buffer member 12 can take the form of a separate conveyor belt, but can also be formed by a slide track or other element.

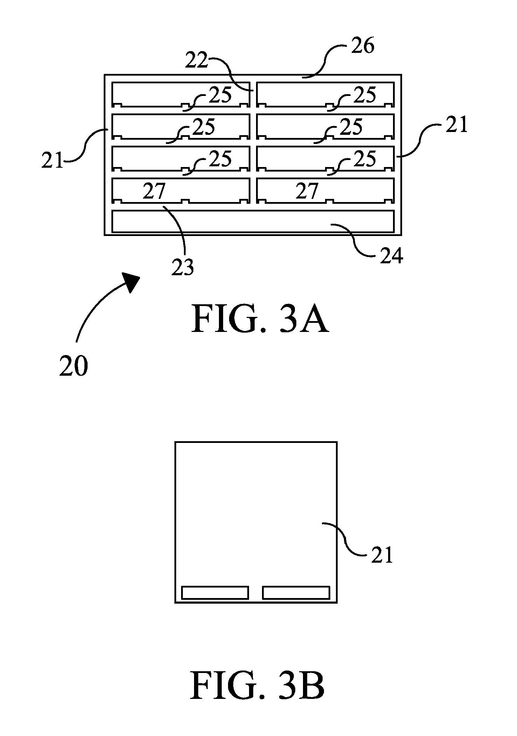

Figures 3A and 3B show a transport container 20 for poultry. Such transport containers are known in the relevant field of the art. A usual type of such transport containers comprises two columns, each of four compartments, placed adjacently of each other. The compartments are collectively enclosed by two vertical side walls 21, a vertical intermediate wall 22 and a vertical rear wall. The two bottom compartments are also bounded on their underside by a bottom wall 23 which is provided with support means 24 to enable pick-up by the prongs of a forklift truck. The bottom compartments are each also bounded by a front wall. Placed above each of the bottom compartments is a horizontal intermediate wall 25 which is connected to a front wall of the overlying compartment, this assembly being slidable in horizontal direction in the direction toward the rear wall in the manner of a drawer between a position closing the underlying compartment and a position opening the underlying compartment. Such horizontal slidable intermediate walls are also placed above the second and third compartments from the bottom. Placed above the top compartments are only horizontally slidable walls 26 which are not connected to a front wall of an overlying compartment.

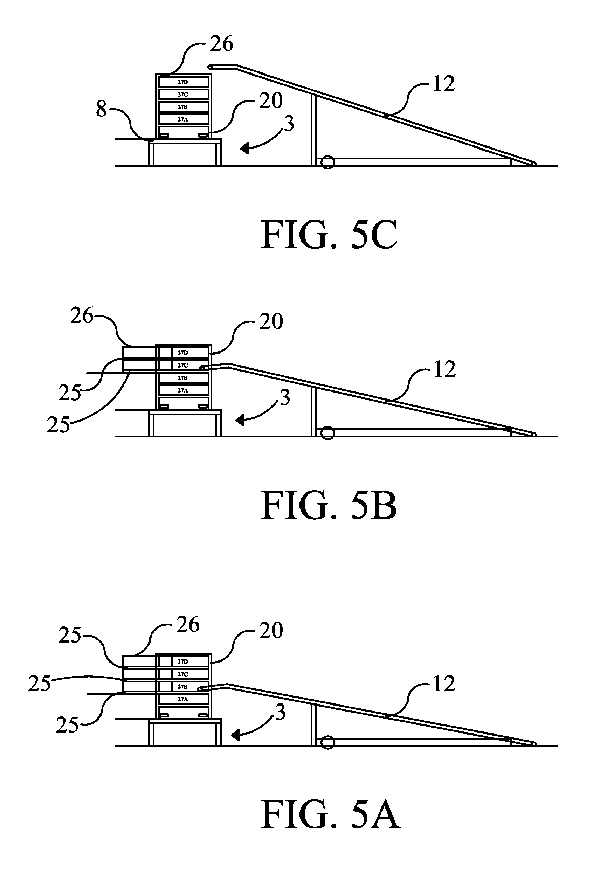

As shown in figure 5A, wherein reference is made to figures 3A and 3B, a container 20 of the above elucidated type is placed on central part 8 of roller conveyor 3, after which all four slidable horizontal intermediate walls are pulled rearward by hand. The discharge end of the second conveyor belt 12, which functions as transport member, is subsequently placed in a position just above the bottom compartment of container 20. The first 10 and second conveyor belt 12 are then switched on so that the poultry animals are supplied from poultry house 2 to the bottom compartment 27A of container 20. The animals only fall here a short distance onto the bottom 23 of compartment 27A. The weight of container 20 increases as compartment 27A is filled. This is detected by weighing device 9 placed under central part 8 of roller conveyor 3. These signals from this device 9 are sent to a control member which, when a determined weight has been reached, reduces the speed of conveyor belts 10, 12 so that the poultry animals are supplied at a slower speed. As soon as a subsequent, slightly greater weight value is reached, this value corresponding to the weight of the container plus the weight of the poultry animals for loading into the relevant compartment, the second conveyor belt 12 is stopped. The relevant compartment 27A then contains the desired quantity of poultry animals. The discharge end of the second conveyor belt 12 is then moved upward, and the lowermost horizontal intermediate wall 25 of container 20 is moved to its closed position.

The second from bottom compartment 27B of the container lying thereabove is then filled in the same manner. This situation is shown in figure 5B. This also takes place for the third from bottom compartment 27C lying thereabove and the top compartment 27D, as shown in figure 5C. As soon as this top compartment 27D of container 20 has been filled with poultry animals and manually closed, roller conveyor 12 is moved through a distance corresponding to the width of compartment 27 and the discharge end of the second conveyor belt 12 is moved downward, after which the filling cycle for the adjacent column of compartments is performed until all compartments 27 of container 20 have been filled. Although the above exemplary embodiment relates to a poultry container 20 with two mutually adjacent columns of four compartments 27, it will be apparent that the invention can also be used with poultry containers having other numbers of compartments or other structures.

It is noted here that the transport speed of the first conveyor belt 10 is modified to that of the second conveyor belt 12 in order to prevent build-up of poultry animals between the first 10 and the second conveyor belt 12. Buffer conveyor 11 does after all have a limited capacity.

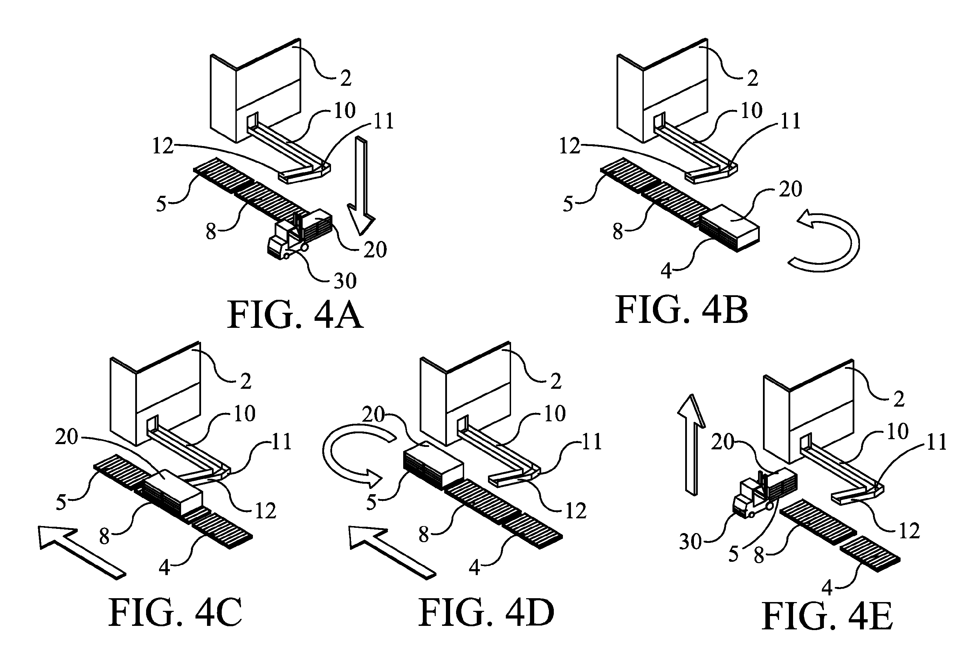

Finally, figure 4A shows the supply of container 20 to loading device 1 with a forklift truck 30 which has container 20 on its prongs. The forklift truck places container 20 onto the supply part 4 of roller conveyor 3 rotated through an angle of 90°. Forklift truck 30 then moves away and supply part 4 of the roller conveyor rotates back to its original position in line with central part 8 of the roller conveyor, after which the situation shown in figure 4B is reached. The roller conveyor then moves container 20 to the loading position as shown in figure 4C. The loading process as elucidated above then takes place. Once the container has been filled, it is moved further over the roller conveyor to the discharge part of the roller conveyor as shown in figure 4D. Finally, the discharge part of the roller conveyor is rotated through an angle of about 90° so that the forklift truck can easily pick up the container and place it for instance in a truck.

It is noted here that, although it is possible in principle to place and pick up the containers from the end surface of the roller conveyor, space is usually lacking for this purpose. Whether or not the containers must be rotated at the beginning or end of the roller conveyor also depends on the direction from which the containers are accessible in the preceding means of transport, or how they have to be placed in the subsequent means of transport.

## Claims

1. Device for loading poultry into poultry containers, comprising:
- a transport member for the poultry driven by a drive member and leading to a loading position;
- a weighing member situated under the loading position for weighing poultry containers located at the loading position;
- a control member for stopping the drive member when the weight measured by the weighing member exceeds a preset value.

2. Device as claimed in claim 1, **characterized in that** the control member is adapted to decrease the speed of the drive member when a first preset value is reached, and to stop the drive member when a second preset value is reached which is greater than the first value.

3. Device as claimed in claim 1 or 2, **characterized in that** the second predetermined value corresponds to the weight of a poultry container plus the average weight of one of the poultry animals times the number of poultry animals for which the poultry container is suitable.

4. Device as claimed in claim 1, 2 or 3, **characterized in that** the transport member is preceded by a supply member which is drivable by a second drive member, and that the control member is adapted to stop the second drive member after stopping the first drive member.

5. Device as claimed in claim 4, **characterized in that** a buffer member is placed between the first and the second transport member.

6. Device as claimed in any of the foregoing claims, **characterized in that** at least one of the transport members is a conveyor belt driven by an electric motor.

7. Device as claimed in any of the foregoing claims, **characterized in that** the discharge end of the transport member is height-adjustable.

8. Device as claimed in claim 7, **characterized in that** the transport member is provided with height-adjusting means drivable under control for the purpose of adjusting the height of the discharge end of the transport member.

9. Device as claimed in claim 3, **characterized in that** the control circuit is adapted to increase this height each time by the same predetermined value.

10. Device as claimed in any of the foregoing claims, **characterized in that** the weighing member is integrated into a transport path for supplying containers to be filled with poultry to the transport position and for discharging containers filled with poultry from the transport position.

11. Device as claimed in claim 10, **characterized in that** at least one of the parts of the transport path is adapted for rotation through an angle of at least 90° about a vertical axis.

12. Device as claimed in claim 10 or 11, **characterized in that** the parts adjacent to both ends of the transport path are tiltable upward over a horizontal axis.

13. Device as claimed in any of the claims 10, 11 or 12, **characterized in that** the transport path is a drivable roller conveyor and that the control device is adapted to drive the roller conveyor after filling of a container.

14. Method for filling a container with poultry, comprising the following steps of:
- carrying the container for filling to a loading position;
- bringing a transport member with its discharge end into or above a container;
- supplying the poultry animals with the transport member until a weight sensor placed below the loading position detects that a predetermined increase in the weight of the container has taken place, this increase in weight corresponding to the number of poultry animals which must be carried into the container, and stops the transport member;
- moving the transport member clear of the container;
- closing the container; and
- removing the container from the loading position.

15. Method as claimed in claim 14, **characterized in that** the container is divided into compartments and that the discharge end of a transport member is carried into or above a first compartment,
- poultry animals are supplied until the weight sensor placed under the loading position detects that a predetermined increase in weight of the container has taken place, this increase in weight corresponding to the number of poultry animals that must be carried into the relevant compartment, and stops the transport member, carrying the discharge end of the transport member into or above a following compartment; and
- repeating the foregoing step until all compartments have been filled.
